# EUROPÄISCHE PATENTANMELDUNG

(11) **EP 3 495 842 A1**
(43) Veröffentlichungstag der Anmeldung: **12.06.2019**
(21) Anmeldenummer: 18208271.9
(22) Anmeldetag: 26.11.2018
(51) Int. Cl.: G01S 7/491, G01S 17/48, G01S 17/88, G01V 8/20

(54) **TRIANGULATIONS-LICHTTASTER**

(30) Priorität: 08.12.2017 DE 102017129236
(71) Anmelder: SICK AG, 79183 Waldkirch/Breisgau (DE)
(72) Erfinder: MERETTIG, Gerhard, 79350 Sexau (DE); GÖTZ, Matthias, 79104 Freiburg (DE); WASLOWSKI, Kai, 79312 Emmendingen (DE); HÖRSCH, Ingolf, 79102 Freiburg (DE)
(74) Vertreter: Manitz Finsterwald Patent- und Rechtsanwaltspartnerschaft mbB

(57) **Zusammenfassung**

Ein Triangulations-Lichttaster zum Erfassen eines in einem Überwachungsbereich befindlichen oder in diesen hineinragenden Objekts umfasst einen Lichtsender zum Aussenden von Sendelichtstrahlen in den Überwachungsbereich und einen Lichtempfänger zum Empfangen von Empfangslichtstrahlen. Der Lichtempfänger umfasst mehrere Empfangsbereiche, die jeweilige Empfangssignale ausgeben, wobei die Empfangsbereiche unterschiedlichen Objektabständen zugeordnet sind und zu diesem Zweck derart angeordnet sind, dass je nach Abstand des zu erfassenden Objekts vom Triangulations-Lichttaster unterschiedliche Empfangsbereiche von remittiertem Empfangslicht beaufschlagt werden. Zum Unterdrücken von Störsignalen ist eine relative Abschwächung des Empfangssignals wenigstens eines ersten Empfangsbereichs gegenüber dem Empfangssignal eines zweiten Empfangsbereichs vorgesehen, wobei der erste Empfangsbereich einem geringeren Objektabstand zugeordnet ist als der zweite Empfangsbereich.

## Beschreibung

Die vorliegende Erfindung betrifft einen Triangulations-Lichttaster zum Erfassen eines in einem Überwachungsbereich befindlichen oder in diesen hineinragenden Objekts, umfassend einen Lichtsender zum Aussenden von Sendelichtstrahlen in den Überwachungsbereich und einen Lichtempfänger zum Empfangen von Empfangslichtstrahlen, wobei der Lichtempfänger mehrere Empfangsbereiche umfasst, die jeweilige Empfangssignale ausgeben, wobei die Empfangsbereiche unterschiedlichen Objektabständen zugeordnet sind und zu diesem Zweck derart angeordnet sind, dass je nach Abstand des zu erfassenden Objekts vom Triangulations-Lichttaster unterschiedliche Empfangsbereiche von remittiertem Empfangslicht beaufschlagt werden.

Derartige Sensoren werden auf verschiedenen Gebieten der Technik dazu verwendet, Objekte an bestimmten Positionen zu erfassen und gegebenenfalls die Entfernung eines Objekts vom Sensor zu bestimmen. Ein Vorteil von Triangulations-Lichttastern gegenüber einfachen schaltenden Näherungssensoren besteht darin, dass der gewünschte Erfassungsabstand einstellbar ist.

Da der Lichtempfänger eines Triangulations-Lichttasters üblicherweise einen relativ großen Empfangssichtwinkel aufweist, besteht eine relativ hohe Wahrscheinlichkeit, Störsignale zu empfangen. Beispielsweise kann das Licht von im Überwachungsbereich befindlichen Lampen als Störlicht auf den Lichtempfänger gelangen. Eine weitere Störlichtquelle sind Nebel-, Rauch- oder Staubteilchen, welche Sendelichtstrahlen auf den Lichtempfänger lenken. Da die Signalstärke des Empfangssignals mit zunehmendem Tastabstand quadratisch abfällt und außerdem sowohl helle als auch dunkle Objekte erfasst werden sollten, benötigen Triangulations-Lichttaster im Allgemeinen eine relativ große Signaldynamik.

Eine Möglichkeit zur Störlichtverringerung besteht darin, den Tast- oder Schaltabstand zu reduzieren, also den Triangulations-Lichttaster näher am zu erfassenden Objekt zu platzieren. Dies ist jedoch bei vielen Anwendungen nicht ohne weiteres möglich.

Man ist daher bestrebt, die Störfestigkeit von Triangulations-Lichttastern zu verbessern, ohne den Schaltabstand zu verringern.

Die Lösung der Aufgabe erfolgt durch einen Triangulations-Lichttaster mit den Merkmalen des Anspruchs 1.

Erfindungsgemäß ist zum Unterdrücken von Störsignalen eine Abschwächung des Empfangssignals wenigstens eines ersten Empfangsbereichs gegenüber dem Empfangssignal eines zweiten Empfangsbereichs vorgesehen, wobei der erste Empfangsbereich einem geringen Objektabstand zugeordnet ist als der zweite Empfangsbereich.

Die Erfindung beruht unter anderem auf der Erkenntnis, dass Störlichtquellen wie Lampen oder Staubteilchen insbesondere dann die gewünschte Tasterfunktion beeinträchtigen, wenn sie sich relativ nahe am Triangulations-Taster befinden. Durch die Signalabschwächung eines entsprechenden, der nahen Umgebung des Tasters zugeordneten Empfangsbereichs kann somit die Störfestigkeit deutlich verbessert werden. Für das Erfassen von Objekten in vergleichsweise großer Entfernung hat die auf den ersten Empfangsbereich bezogene Störlichtunterdrückung hingegen kaum einen Einfluss. Ein weiterer Vorteil eines erfindungsgemäßen Triangulations-Lichttasters besteht darin, dass die erforderliche Signaldynamik reduziert ist. Dies verringert insbesondere den Schaltungsaufwand und somit die Herstellungskosten.

Für den vorliegenden Text ist der Begriff "Abschwächung" des Empfangssignals des ersten Empfangsbereichs gegenüber dem Empfangssignal des zweiten Empfangsbereichs relativ zu verstehen, also auch in einer Verstärkung des Empfangssignals des zweiten Empfangsbereichs bei unverändertem Empfangssignal des ersten Empfangsbereichs oder in einer unterschiedlichen Verstärkung der jeweiligen Empfangssignale bestehen kann. Außerdem ist unter einer Abschwächung des Empfangssignals sowohl ein direktes Abschwächen als auch ein nachträgliches Abschwächen zu verstehen, also beispielsweise das Abschwächen eines verarbeiteten Empfangssignals.

Die Abschwächung kann grundsätzlich auch dadurch erfolgen, dass einzelne Lichtempfangselemente einer Gruppe von Lichtempfangselementen deaktiviert, also abgeschaltet werden. Das für die Gruppe erzeugte, auf einer gemeinsamen Verarbeitung beruhende Gesamtsignal, beispielsweise ein Summensignal, ist abgeschwächt, wenn die Anzahl an zu verarbeitenden Empfangssignalen verringert ist. Ein Lichtfleck, der sich über mehrere Lichtempfangselemente erstreckt, erzeugt ein umso geringeres Gesamtsignal, je weniger der betreffenden Lichtempfangselemente eingeschaltet sind. Speziell könnte vorgesehen sein, dass für eine bestimmte Gruppe jedes zweite oder jedes dritte Lichtempfangselement abgeschaltet ist. Ebenfalls ist es z. B. möglich, dass von drei aufeinanderfolgenden Lichtempfangselementen jeweils zwei abgeschaltet werden.

Gemäß vorteilhafter Ausführungsformen der Erfindung ist eine Abschwächung des Empfangssignals des ersten Empfangsbereichs um einen Abschwächungsfaktor von wenigstens 2, bevorzugt um einen Abschwächungsfaktor von wenigstens 5 und besonders bevorzugt um einen Abschwächungsfaktor von wenigstens 20 vorgesehen. In der Praxis hat sich eine solche deutliche Abschwächung als besonders günstig herausgestellt.

Eine Ausgestaltung der Erfindung sieht vor, dass eine Empfangsfläche des Lichtempfängers in einen Nahbereich und einen Fernbereich unterteilt ist, und die Abschwächung ausschließlich für Empfangsbereiche des Nahbereichs vorgesehen ist. Eine Signalabschwächung ausschließlich für einen fest vorgegebenen Nahbereich ist hierbei besonders einfach zu bewerkstelligen.

Es kann eine Abschwächung des Empfangssignals für alle Empfangsbereiche des Nahbereichs um einen einheitlichen Abschwächungsfaktor vorgesehen sein. Dies ermöglicht eine besonders einfache und kostengünstige Ausführung. Beispielsweise kann eine Abschwächung für jeden Empfangsbereich vorgesehen sein, der einem vorgegebenen Referenz-Objektabstand oder einem geringeren Objektabstand zugeordnet ist.

Eine weitere Ausführungsform der Erfindung sieht vor, dass eine Empfangsfläche des Lichtempfängers in einen Nahbereich, einen Fernbereich und wenigstens einen dazwischen befindlichen Zwischenbereich unterteilt ist, wobei eine Abschwächung des Empfangssignals jedes Empfangsbereichs des Nahbereichs gegenüber den Empfangssignalen der Empfangsbereiche des Fernbereichs um einen ersten Abschwächungsfaktor und eine Abschwächung des Empfangssignals jedes Empfangsbereichs des Zwischenbereichs gegenüber den Empfangssignalen der Empfangsbereiche des Fernbereichs um einen zweiten Abschwächungsfaktor vorgesehen ist, wobei der erste Abschwächungsfaktor größer ist als der zweite Abschwächungsfaktor. Bei dieser Ausgestaltung erfolgt also eine stufenweise stärker werdende Abschwächung der Empfangssignale in Richtung geringerer Objektabstände. Dadurch kann das Ansprechverhalten des Triangulations-Lichttasters in Bezug auf Störlicht feiner abgestimmt werden. Die Empfangsfläche des Lichtempfängers kann auch in einen Nahbereich, einen Fernbereich und mehrere dazwischen befindliche Zwischenbereiche unterteilt sein, wobei für die Empfangssignale der Zwischenbereiche eine stufenweise stärker werdende Abschwächung der Empfangssignale in Richtung geringerer Objektabstände vorgesehen ist. Das heißt es kann ein treppenartiger Anstieg der Abschwächungsfaktoren in Richtung geringerer Objektabstände vorgesehen sein.

Gemäß einer weiteren Ausführungsform der Erfindung ist für die Empfangssignale der Empfangsbereiche eine umso geringere Abschwächung vorgesehen, je geringer der Objektabstand ist, dem der jeweilige Empfangsbereich zugeordnet ist. Auf diese Weise wird vorteilhafter Weise die Abschwächung der Signale, die zu einem geringen Objektabstand gehören, zumindest teilweise durch die quadratische Abhängigkeit der Lichtstärke vom Objektabstand aufgefangen. Mit anderen Worten kann das Ausmaß der Abschwächung eine Funktion der Position des Empfangsbereichs auf der Empfangsfläche des Lichtempfängers und somit des Objektsabstands sein. Da hier eine Vielzahl von unterschiedlichen Funktionen zur Anwendung kommen kann, ergeben sich vielfältige Möglichkeiten für eine anwendungsspezifische Anpassung des Ansprechverhaltens.

Eine weitere Ausgestaltung der Erfindung sieht vor, dass eine Verarbeitungseinrichtung zum Verarbeiten der Empfangssignale einer den ersten Empfangsbereich umfassenden ersten Gruppe von Empfangsbereichen und zum Ausgeben eines entsprechenden Verarbeitungssignals vorgesehen ist, wobei gegebenenfalls eine weitere Verarbeitungseinrichtung zum Verarbeiten der Empfangssignale einer den zweiten Empfangsbereich umfassenden zweiten Gruppe von Empfangsbereichen und zum Ausgeben eines entsprechenden Verarbeitungssignals vorgesehen ist, und wobei eine Abschwächung des Verarbeitungssignals der ersten Gruppe von Empfangsbereichen gegenüber dem Empfangssignal des zweiten Empfangsbereichs oder eines Verarbeitungssignals der zweiten Gruppe von Empfangsbereichen vorgesehen ist. Die erfindungsgemäß vorgesehene Abschwächung kann sich also nicht nur auf ein Empfangssignal eines einzelnen Empfangsbereichs beziehen, sondern auch auf das gemeinsame Signal mehrerer miteinander verschalteter Empfangsbereiche. Eine solche Verschaltung kann im Rahmen einer Signalverarbeitung vorgesehen sein. Grundsätzlich kann eine Verschaltung mehrerer Empfangsbereiche auch ohne Verarbeitungseinrichtung bewerkstelligt werden. Der Vorteil einer Verarbeitungseinrichtung besteht jedoch darin, dass gleichzeitig mit der Verschaltung mehrerer Empfangsbereiche auch eine Signalverstärkung und/oder eine Signalfilterung durchgeführt werden kann. Im einfachsten Fall sind genau zwei Gruppen von Empfangsbereichen vorgesehen, die den Nahbereich einerseits und den Fernbereich andererseits bilden.

Der Lichtempfänger kann eine kontinuierliche Lichtempfangsfläche aufweisen, auf welcher gleich große oder unterschiedlich große Lichtempfangsbereiche definiert sind. Bevorzugt ist es jedoch, dass die Empfangsbereiche durch separate Empfangselemente gebildet sind, wenn zum Beispiel keine hohe Ortsauflösung notwendig ist. Beispielsweise kann es sich bei den separaten Empfangselementen um Fotodioden handeln. Bevorzugt sind die Empfangselemente entlang einer Linie angeordnet.

Eine Auswerteeinheit des Triangulations-Lichttasters kann dazu ausgebildet sein, für die Empfangsbereiche in Abhängigkeit von den zugehörigen Objektabständen anhand einer hinterlegten Formel jeweilige Abschwächungsfaktoren zu ermitteln, welche einer Abschwächung der betreffenden Empfangssignale zugrunde zu legen sind. Die Formel kann zum Beispiel so definiert sein, dass für ein vorgegebenes Zielobjekt und eine vorgegebene Empfängeroptik eine bestimmte Zielfunktion erreicht wird, beispielsweise eine vorgegebene Schwarzweiß-Verschiebung oder eine vorgegebene Fehlschaltwahrscheinlichkeit über die Tastweite.

Ein weitere Ausführungsform der Erfindung sieht vor, dass den Empfangsbereichen jeweilige Signalverstärker zum Verstärken der Empfangssignale zugeordnet sind, wobei für das Empfangssignal des ersten Empfangsbereichs eine geringere Verstärkung vorgesehen ist als für das Empfangssignal des zweiten Empfangsbereichs. Eine relative Signalabschwächung mittels unterschiedlicher Verstärkungen ist besonders einfach zu bewerkstelligen. Das Vorsehen unterschiedlicher Verstärkungen für verschiedene Empfangsbereiche kann beispielsweise mittels einer vorgegebenen Verstärkungseinstellungsregel erfolgen oder in Abhängigkeit von der Anzahl der vorhandenen Empfangsbereiche festgelegt sein. Alternativ oder zusätzlich kann die Verstärkung in Abhängigkeit von einer ermittelten Störgröße festgelegt sein. Die Signalverstärker der Empfangsbereiche können insgesamt eine Einheit bilden. Je nach Anwendung können die Signalverstärker für eine analoge und/oder für eine digitale Signalverstärkung ausgebildet sein. Eine analoge Signalverstärkung ist insofern vorteilhaft, als bei einer Anwendung des erfindungsgemäßen Abschwächungsprinzips auf analoge Signale die erforderliche Signaldynamik verringert wird.

Zur Abschwächung des Empfangssignals des ersten Empfangsbereichs kann eine Empfindlichkeit des ersten Empfangsbereichs reduziert sein. Eine Einstellung der Empfindlichkeit eines Empfangsbereichs kann beispielsweise im Falle einer Fotodiode durch Steuerung des zugeführten Diodenstroms erfolgen.

Zur Abschwächung des Empfangssignals des ersten Empfangsbereichs kann eine Detektionsschwelle oder eine Schaltschwelle des ersten Empfangsbereichs angehoben sein. Bei bestimmten Anwendungen kann auch eine Kombination der drei Prinzipien "Signalabschwächung durch Verstärkungsanpassung", "Signalabschwächung durch Empfindlichkeitsanpassung" und "Signalabschwächung durch Schaltschwellenanpassung" vorhanden sein.

Der erste Empfangsbereich kann einer Gruppe von Empfangsbereichen zugeordnet sein, für die eine gemeinsame Verarbeitung der Empfangssignale vorgesehen ist, wobei eine Abschwächung eines Verarbeitungssignals der Gruppe durch Deaktivieren wenigstens eines Lichtempfangsbereichs der Gruppe von Empfangsbereichen vorgesehen ist. Diese Ausgestaltung eignet sich insbesondere für Ausführungsformen, bei welchen die Empfangsbereiche durch separate Empfangselemente, also zum Beispiel Fotodioden, gebildet sind. Die Abschwächung kann in relativ einfacher Weise durch Deaktivieren, also Abschalten einzelner Lichtempfangselemente erfolgen. Beispielsweise könnte für eine Gruppe von gemeinsam zu verarbeitenden Lichtempfangselementen vorgesehen sein, dass jedes zweite oder jedes dritte Lichtempfangselement abgeschaltet ist.

Der Triangulations-Lichttaster kann eine Auswerteeinheit umfassen, die ein Schaltsignal erzeugt, wenn sich das Objekt in einem vorgegebenen Schaltabstand befindet, wobei der Schaltabstand einstellbar ist. Ein solcher Triangulations-Lichttaster kann in einer Vielzahl unterschiedlicher Anwendungssituationen mit verschiedenen Tastweiten verwendet werden.

Vorzugsweise ist die Abschwächung des Empfangssignals des ersten Empfangsbereichs unabhängig vom eingestellten Schaltabstand. Dies erweist sich hinsichtlich der Störfestigkeit als besonders günstig.

Die Erfindung betrifft auch ein Verfahren zum Betreiben eines Triangulations-Lichttasters, der zum Erfassen eines in einem Überwachungsbereich befindlichen oder in diesen hineinragenden Objekts vorgesehen ist und einen Lichtsender zum Aussenden von Sendelichtstrahlen in den Überwachungsbereich sowie einen Lichtempfänger zum Empfangen von Empfangslichtstrahlen umfasst, wobei der Lichtempfänger mehrere Empfangsbereiche umfasst, die jeweilige Empfangssignale ausgeben, wobei die Empfangsbereiche unterschiedlichen Objektabständen zugeordnet sind und zu diesem Zweck derart angeordnet sind, dass je nach Abstand des zu erfassenden Objekts vom Triangulations-Lichttaster unterschiedliche Empfangsbereiche von remittiertem Empfangslicht beaufschlagt werden. Erfindungsgemäß wird zum Unterdrücken von Störsignalen das Empfangssignal wenigstens eines ersten Empfangsbereichs gegenüber dem Empfangssignal eines zweiten Empfangsbereichs abgeschwächt, wobei der erste Empfangsbereich einem geringerem Objektabstand zugeordnet ist als der zweite Empfangsbereich. Bei einem erfindungsgemäßen Verfahren können insbesondere die Schritte ausgeführt werden, die vorstehend in Bezug auf die Komponenten eines erfindungsgemäßen Triangulations-Lichttasters beschrieben sind.

Weiterbildungen der Erfindung sind auch den abhängigen Ansprüchen, der Beschreibung sowie der beigefügten Zeichnung zu entnehmen.

Die Erfindung wird nachfolgend beispielhaft unter Bezugnahme auf die Zeichnung besch rieben.

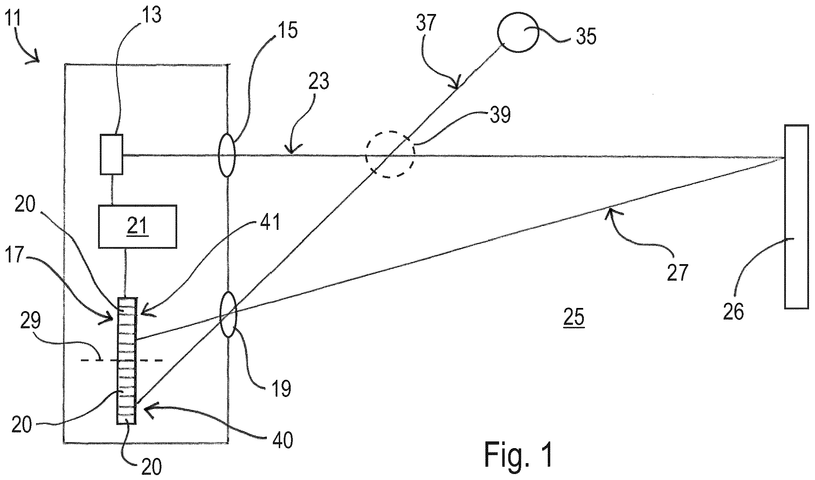

- Fig. 1: ist eine schematische Darstellung eines erfindungsgemäßen Triangulations-Lichttasters sowie eines durch diesen zu erfassenden Objekts.

Der in Fig. 1 gezeigte erfindungsgemäße Triangulations-Lichttaster 11 umfasst einen Lichtsender 13, beispielsweise eine Laserdiode, dem eine Sendeoptik 15 zugeordnet ist. Weiterhin umfasst der Triangulations-Lichttaster 11 einen Lichtempfänger 17 sowie eine diesem zugeordnete Empfangsoptik 19. Der Lichtempfänger 17 ist bei dem dargestellten Ausführungsbeispiel ein Fotodioden-Array mit einer linearen Anordnung von mehreren separaten Fotodioden 20. Eine elektronische Steuereinrichtung 21 des Triangulations-Lichttasters 11 steht mit dem Lichtsender 13 und dem Lichtempfänger 17 in Signalverbindung und steuert den Betrieb des Triangulations-Lichttasters 11.

Während des Betriebs des Triangulations-Lichttasters 11 sendet der Lichtsender 13 Sendelichtstrahlen 23 in einen Überwachungsbereich 25, in welchem sich ein zu erfassendes Objekt 26 befindet. Von dem Objekt 26 remittierte Lichtstrahlen gelangen als Empfangslichtstrahlen 27 auf den Lichtempfänger 17. Je nachdem, wie weit das Objekt 26 vom Triangulations-Lichttaster 11 entfernt ist, werden unterschiedliche Fotodioden 20 von den Empfangslichtstrahlen 27 beaufschlagt. Dies entspricht dem grundsätzlich bekannten Triangulationsprinzip.

Der von der Empfangsoptik 19 erzeugte Lichtfleck der Empfangslichtstrahlen 27 befindet sich umso weiter vom Lichtsender 13 entfernt, je näher sich das Objekt 26 am Triangulations-Lichttaster 11 befindet. Das dem Lichtsender 13 zugewandte Ende des Lichtempfängers 17 definiert also das ferne Ende des Tastweitenbereichs (Fernbereich), während das dem Lichtsender 13 abgewandte Ende des Lichtempfängers 17 das nahe Ende des Tastweitenbereichs definiert (Nahbereich). Bei jeder Veränderung des Objektabstands oder Tastabstands verändert sich die Position des Lichtflecks auf dem Lichtempfänger 17. Ein virtueller Trennsteg 29, der beispielsweise mittels eines Einlernvorgangs eingestellt werden kann, definiert einen Schaltpunkt des Triangulations-Lichttasters 11. Bei Bedarf können auch mehrere virtuelle Trennstege festgelegt werden.

Die eine Auswerteeinheit bildende Steuereinrichtung 21 erzeugt während des Betriebs des Triangulations-Lichttasters 11 ein Schaltsignal, wenn sich das Objekt 26 in einem durch den virtuellen Trennsteg 29 vorgegebenen Schaltabstand befindet. Durch Verschieben des virtuellen Trennstegs 29 kann der Schaltabstand verändert werden.

Fig. 1 zeigt eine erste Störlichtquelle in Form einer Lampe 35, die sich im Überwachungsbereich 25 befindet. Von der Lampe 35 abgestrahltes Licht gelangt als Störlicht 37 auf den Lichtempfänger 17. Eine zweite, gestrichelt dargestellte Störlichtquelle ist durch ein Partikel 39 gebildet, das sich im Strahlweg der Sendelichtstrahlen 23 befindet. Bei dem Partikel 39 kann es sich z.B. um ein Staub-, Nebel- oder Rauchpartikel handeln. Es versteht sich, dass das auf den Lichtempfänger 17 gelangende Störlicht 37 die Funktion des Triangulations-Lichttasters 11 beeinträchtigt. Da die Lampe 35 üblicherweise an der Decke montiert ist, gelangt das von ihr ausgehende Störlicht 37 hauptsächlich auf denjenigen Bereich des Lichtempfängers 17, der einem geringen Objektabstand entspricht und somit einen Nahbereich 40 bildet. Von Partikeln 39 erzeugtes Störlicht 37 beeinträchtigt ebenfalls den Nahbereich 40 in besonderem Maße, da das von den Partikeln 39 remittierte Störlicht mit zunehmendem Abstand vom Triangulations-Lichttaster 11 geringer wird. Der einem großen Objektabstand entsprechende Fernbereich 41 des Lichtempfängers 17 ist dagegen nur in geringem Maße von Störlicht 37 betroffen.

Erfindungsgemäß ist daher eine Abschwächung der Empfangssignale der Fotodioden 20 für alle Fotodioden 20 des Nahbereichs 40 gegenüber den Empfangssignalen der Fotodioden 20 des Fernbereichs 41 vorgesehen. Diese Abschwächung kann beispielsweise durch eine unterschiedliche Verstärkung in einem dem Lichtempfänger 17 zugeordneten, in Fig. 1 nicht einzeln dargestellten Signalverstärker vorgesehen sein. Das heißt die Signale der Fotodioden 20 des Nahbereichs 40 können um einen vorgegebenen Abschwächungsfaktor geringer verstärkt werden als die Fotodioden 20 des Fernbereichs 41. Vorzugsweise beträgt der Abschwächungsfaktor wenigstens 2 und höchstens 70. Ein einzelner einheitlicher Abschwächungsfaktor ermöglicht eine besonders einfache Ausführungsform. Grundsätzlich ist es jedoch möglich, eine Unterteilung der Empfangsfläche des Lichtempfängers 17 in einen Nahbereich, einen Fernbereich sowie einen oder mehrere dazwischen befindliche Zwischenbereiche vorzusehen und jedem dieser Bereiche einen eigenen Abschwächungsfaktor zuzuordnen. Außerdem kann es bei bestimmten Anwendungen bevorzugt sein, jeder einzelnen Fotodiode 20 einen Abschwächungsfaktor zuzuordnen, der beispielsweise auf die dem fernen Ende des Tastweitenbereichs zugeordnete, im Bild also die unterste, Fotodiode 20 bezogen ist.

Die Unterteilung der Empfangsfläche des Lichtempfängers 17 in einen Nahbereich 40 und einen Fernbereich 41 muss nicht notwendigerweise durch den virtuellen Trennsteg 29 vorgegeben sein. Die Abschwächung des Empfangssignals kann unabhängig vom eingestellten Schaltabstand und somit unabhängig vom virtuellen Trennsteg 29 sein. Beispielsweise könnte als Nahbereich 40 die dem Lichtsender 13 abgewandte Hälfte der Anordnung von Fotodioden 20 festgelegt sein.

Alternativ oder zusätzlich zu einer wie vorstehend beschriebenen Signalabschwächung mittels unterschiedlicher Verstärkung kann auch eine Signalabschwächung durch Einstellung unterschiedlicher Empfindlichkeiten, Detektionsschwellen oder Schaltschwellen der Fotodioden 20 vorgesehen sein.

Zur Beeinflussung der Verstärkung kann eine Verstärkungseinstellungsregel angewendet werden. Beispielsweise können diejenigen Fotodioden 20, die einem Tastabstand von bis zu 20% des maximalen Tastabstands zugeordnet sind, mit einem Abschwächungsfaktor 50 geringer verstärkt werden als diejenigen Fotodioden 20, die einem Tastabstand von mehr als 50% des maximalen Tastabstands zugeordnet sind. Diejenigen Fotodioden 20, die einem Tastabstand von mehr als 20% und bis zu 50% des maximalen Tastabstands zugeordnet sind, können mit einem Abschwächungsfaktor 2 geringer verstärkt werden als diejenigen Fotodioden 20, die einem Tastabstand von mehr als 50% des maximalen Tastabstands zugeordnet sind.

Gemäß einer weiteren Ausgestaltung der Erfindung werden diejenigen Fotodioden 20, die dem virtuellen Trennsteg 29 benachbart sind, voll verstärkt. In Richtung geringerer Tastabstände kann die Verstärkung jedes weiteren Bereichs um einen Faktor 2 reduziert werden.

Anstelle einer Verstärkungseinstellungsregel kann auch eine analytische Formel in einem Speicher der Steuereinrichtung 21 hinterlegt sein, die für jede Fotodiode 20 eine Verstärkung derart definiert, dass für ein definiertes Zielobjekt und eine bekannte Empfangsoptik 19 eine bestimmte Zielfunktion erreicht wird.

Der Triangulations-Lichttaster 11 kann auch eine Verarbeitungseinrichtung zum Verarbeiten der Empfangssignale von Gruppen von Fotodioden 20 umfassen, was in Fig. 1 jedoch nicht dargestellt ist. Derartige Verarbeitungseinrichtungen sind beispielsweise in der DE 102 31 178 A1 offenbart. Das Beeinflussen der Signalstärke kann bei einer solchen Ausgestaltung die von der Verarbeitungseinrichtung oder den Verarbeitungseinrichtungen ausgegebenen Verarbeitungssignale betreffen.

Da bei dem erfindungsgemäßen Triangulations-Lichttaster 11 bevorzugt die häufig auftretenden und die starken Störsignale gedämpft werden, ergibt sich ein besonders zuverlässiger Betrieb, ohne dass hierfür die Reduzierung des Schaltabstands erforderlich wäre. Außerdem ist die erforderliche Signaldynamik reduziert, was den Schaltungsaufwand beträchtlich reduziert. Die Detektion im Fernbereich ist dagegen durch die Signaldämpfung nicht oder nur in geringem Umfang beeinträchtigt.

### Bezugszeichenliste

- 11: Triangulations-Lichttaster
- 13: Lichtsender
- 15: Sendeoptik
- 17: Lichtempfänger
- 19: Empfangsoptik
- 20: Fotodiode
- 21: Steuereinrichtung
- 23: Sendelichtstrahlen
- 25: Überwachungsbereich
- 26: Objekt
- 27: Empfangslichtstrahlen
- 29: virtueller Trennsteg
- 35: Lampe
- 37: Störlicht
- 39: Partikel
- 40: Nahbereich
- 41: Fernbereich

## Patentansprüche

1. Triangulations-Lichttaster (11) zum Erfassen eines in einem Überwachungsbereich (25) befindlichen oder in diesen hineinragenden Objekts (26),
umfassend einen Lichtsender (13) zum Aussenden von Sendelichtstrahlen (23) in den Überwachungsbereich (25) und einen Lichtempfänger (17) zum Empfangen von Empfangslichtstrahlen (27),
wobei der Lichtempfänger (17) mehrere Empfangsbereiche (20) umfasst, die jeweilige Empfangssignale ausgeben, wobei die Empfangsbereiche (20) unterschiedlichen Objektabständen zugeordnet sind und zu diesem Zweck derart angeordnet sind, dass je nach Abstand des zu erfassenden Objekts (26) vom Triangulations-Lichttaster (11) unterschiedliche Empfangsbereiche (20) von remittiertem Empfangslicht (27) beaufschlagt werden,
**dadurch gekennzeichnet, dass**
zum Unterdrücken von Störsignalen eine relative Abschwächung des Empfangssignals wenigstens eines ersten Empfangsbereichs (20) gegenüber dem Empfangssignal eines zweiten Empfangsbereichs (20) vorgesehen ist, wobei der erste Empfangsbereich (20) einem geringeren Objektabstand zugeordnet ist als der zweite Empfangsbereich (20).

2. Triangulations-Lichttaster nach Anspruch 1,
**dadurch gekennzeichnet, dass** eine Abschwächung des Empfangssignals des ersten Empfangsbereichs (20) um einen Abschwächungsfaktor von wenigstens zwei, bevorzugt um einen Abschwächungsfaktor von wenigstens fünf und besonders bevorzugt um einen Abschwächungsfaktor von wenigstens zwanzig, vorgesehen ist.

3. Triangulations-Lichttaster nach Anspruch 1 oder 2,
**dadurch gekennzeichnet, dass**
eine Empfangsfläche des Lichtempfängers (17) in einen Nahbereich (40) und einen Fernbereich (41) unterteilt ist und die Abschwächung ausschließlich für Empfangsbereiche (20) des Nahbereichs (40) vorgesehen ist.

4. Triangulations-Lichttaster nach Anspruch 3,
**dadurch gekennzeichnet, dass**
eine Abschwächung des Empfangssignals für alle Empfangsbereiche (20) des Nahbereichs (40) um einen einheitlichen Abschwächungsfaktor vorgesehen ist.

5. Triangulations-Lichttaster nach Anspruch 1 oder 2,
**dadurch gekennzeichnet, dass**
eine Empfangsfläche des Lichtempfängers in einen Nahbereich, einen Fernbereich und wenigstens einen dazwischen befindlichen Zwischenbereich unterteilt ist, wobei eine Abschwächung des Empfangssignals jedes Empfangsbereichs (20) des Nahbereichs gegenüber den Empfangssignalen der Empfangsbereiche (20) des Fernbereichs um einen ersten Abschwächungsfaktor und eine Abschwächung des Empfangssignals jedes Empfangsbereichs (20) des Zwischenbereichs gegenüber den Empfangssignalen der Empfangsbereiche (20) des Fernbereichs um einen zweiten Abschwächungsfaktor vorgesehen ist, wobei der erste Abschwächungsfaktor größer ist als der zweite Abschwächungsfaktor.

6. Triangulations-Lichttaster nach Anspruch 1 oder 2,
**dadurch gekennzeichnet, dass**
für die Empfangssignale der Empfangsbereiche (20) eine umso geringere Abschwächung vorgesehen ist, je geringer der Objektabstand ist, dem der jeweilige Empfangsbereich (20) zugeordnet ist.

7. Triangulations-Lichttaster nach einem der vorstehenden Ansprüche,
**dadurch gekennzeichnet , dass**
eine Verarbeitungseinrichtung zum Verarbeiten der Empfangssignale einer den ersten Empfangsbereich (20) umfassenden ersten Gruppe von Empfangsbereichen (20) und zum Ausgeben eines entsprechenden Verarbeitungssignals vorgesehen ist, wobei
gegebenenfalls eine weitere Verarbeitungseinrichtung zum Verarbeiten der Empfangssignale einer den zweiten Empfangsbereich (20) umfassenden zweiten Gruppe von Empfangsbereichen (20) und zum Ausgeben eines entsprechenden Verarbeitungssignals vorgesehen ist, und wobei eine Abschwächung des Verarbeitungssignals der ersten Gruppe von Empfangsbereichen (20) gegenüber dem Empfangssignal des zweiten Empfangsbereichs (20) oder eines Verarbeitungssignals der zweiten Gruppe von Empfangsbereichen (20) vorgesehen ist.

8. Triangulations-Lichttaster nach einem der vorstehenden Ansprüche,
**dadurch gekennzeichnet, dass**
die Empfangsbereiche (20) durch separate Empfangselemente gebildet sind.

9. Triangulations-Lichttaster nach einem der vorstehenden Ansprüche,
**dadurch gekennzeichnet, dass**
eine Auswerteeinheit (21) des Triangulations-Lichttasters (11) dazu ausgebildet ist, für die Empfangsbereiche (20) in Abhängigkeit von den zugehörigen Objektabständen anhand einer hinterlegten Formel jeweilige Abschwächungsfaktoren zu ermitteln, welche einer Abschwächung der betreffenden Empfangssignale zugrunde zu legen sind.

10. Triangulations-Lichttaster nach einem der vorstehenden Ansprüche,
**dadurch gekennzeichnet, dass**
den Empfangsbereichen (20) jeweilige Signalverstärker zum Verstärken der Empfangssignale zugeordnet sind, wobei für das Empfangssignal des ersten Empfangsbereichs (20) eine geringere Verstärkung vorgesehen ist als für das Empfangssignal des zweiten Empfangsbereichs (20).

11. Triangulations-Lichttaster nach einem der vorstehenden Ansprüche,
**dadurch gekennzeichnet, dass**
zur Abschwächung des Empfangssignals des ersten Empfangsbereichs (20) eine Empfindlichkeit des ersten Empfangsbereichs (20) reduziert ist.

12. Triangulations-Lichttaster nach einem der vorstehenden Ansprüche,
**dadurch gekennzeichnet, dass**
zur Abschwächung des Empfangssignals des ersten Empfangsbereichs (20) eine Detektionsschwelle oder eine Schaltschwelle des ersten Empfangsbereichs (20) angehoben ist.

13. Triangulations-Lichttaster nach einem der vorstehenden Ansprüche,
**dadurch gekennzeichnet, dass**
der erste Empfangsbereich (20) einer Gruppe von Empfangsbereichen (20) zugeordnet ist, für die eine gemeinsame Verarbeitung der Empfangssignale vorgesehen ist, wobei eine Abschwächung eines Verarbeitungssignals der Gruppe durch Deaktivieren wenigstens eines Lichtempfangsbereichs (20) der Gruppe von Empfangsbereichen (20) vorgesehen ist.

14. Triangulations-Lichttaster nach einem der vorstehenden Ansprüche,
**dadurch gekennzeichnet, dass**
der Triangulations-Lichttaster (11) eine Auswerteeinheit (21) umfasst, die ein Schaltsignal erzeugt, wenn sich das Objekt (26) in einem vorgegebenen Schaltabstand befindet, wobei der Schaltabstand einstellbar ist,
wobei vorzugsweise die Abschwächung des Empfangssignals des ersten Empfangsbereichs (20) unabhängig vom eingestellten Schaltabstand ist.

15. Verfahren zum Betreiben eines Triangulations-Lichttasters (11), der zum Erfassen eines in einem Überwachungsbereich (25) befindlichen oder in diesen hineinragenden Objekts (26) vorgesehen ist und einen Lichtsender (13) zum Aussenden von Sendelichtstrahlen (23) in den Überwachungsbereich (25) sowie einen Lichtempfänger (17) zum Empfangen von Empfangslichtstrahlen (27) umfasst,
wobei der Lichtempfänger (17) mehrere Empfangsbereiche (20) umfasst,
die jeweilige Empfangssignale ausgeben, wobei die Empfangsbereiche (20) unterschiedlichen Objektabständen zugeordnet sind und zu diesem Zweck derart angeordnet sind, dass je nach Abstand des zu erfassenden Objekts (26) vom Triangulations-Lichttaster (11) unterschiedliche Empfangsbereiche (20) von remittiertem Empfangslicht (27) beaufschlagt werden,
**dadurch gekennzeichnet, dass**
zum Unterdrücken von Störsignalen das Empfangssignal wenigstens eines ersten Empfangsbereichs (20) relativ gegenüber dem Empfangssignal eines zweiten Empfangsbereichs (20) abgeschwächt wird, wobei der erste Empfangsbereich (20) einem geringeren Objektabstand zugeordnet ist als der zweite Empfangsbereich (20).
